# EUROPÄISCHE PATENTSCHRIFT

(11) **EP 1 370 952 B1**
(45) Veröffentlichungstag und Bekanntmachung des Hinweises auf die Patenterteilung: **01.09.2004**
(21) Anmeldenummer: 02706508.5
(22) Anmeldetag: 19.03.2002
(51) Int. Cl.: G06F 13/10, G06F 13/42

(54) **KOMMUNIKATIONSVERFAHREN ZUR REALISIERUNG VON EREIGNISKANÄLEN IN EINEM ZEITGESTEUERTEN KOMMUNIKATIONSSYSTEM**
COMMUNICATION METHOD FOR ESTABLISHING EVENT CHANNELS IN A TIMED COMMUNICATION SYSTEM
PROCEDE DE COMMUNICATION POUR REALISER DES CANAUX D'EVENEMENT DANS UN SYSTEME DE COMMUNICATION TEMPORISE

(30) Priorität: 19.03.2001 AT 4292001
(43) Veröffentlichungstag der Anmeldung: 17.12.2003
(73) Patentinhaber: FTS Computertechnik Ges.mbH, 2500 Baden-Siegenfeld (AT)
(72) Erfinder: KOPETZ, Hermann, A-2500 Baden-Siegenfeld (AT)
(74) Vertreter: Patentanwaltskanzlei Matschnig
(86) Internationale Anmeldenummer: PCT/AT2002/000090
(87) Internationale Veröffentlichungsnummer: WO 2002/075557

(56) Entgegenhaltungen:
- WO-A-94/06080
- WO-A-96/20547
- DE-C- 4 242 197
- US-A- 5 694 542
- US-A- 5 793 994

## Beschreibung

### LITERATUR

### Zitierte Patente:

US Patent:
5,694,542 2.12.1997 Kopetz, H.

Europäisches Patent:
0658257 18.12.96 Kopetz, H.

Kopetz, H. (1997). *Real-Time Systems, Design Principles for Distributed Embedded Applications; ISBN: 0-7923-9894-7*. Boston. Kluwer Academic Publishers.

Maekawa, M. (1987) et. al., *Operating Systems, ISBN 0-8053-7121-4*, Menlo Park, Cal, Benjamin Cummings Publishing Company.

CAN (1990). *Controller Area Network CAN, an In-Vehicle Serial Communication Protocol.* SAB Handbook 1992, SAE Press. p. 20.341-20.355, Society of Automotive Engineers, Warrendale, Pa, USA.

IOOP (1994). *OMG's Internet Inter-ORB Protocol (IIOP)*, Object Management Group. Internet: www.omg.org, Boston, USA

### HINTERGRUND DIESER ERFINDUNG

Ein verteiltes fehlertolerantes Echtzeitcomputersystem besteht aus einer Anzahl von Rechnerknoten, die jeweils einen Host-Rechner und einen Kommunikationskontroller beinhalten. Die Schnittstelle zwischen Host-Rechner und Kommunikationskontroller wird als CNI (Communication Network Interface) bezeichnet. Die Kommunikationskontroller bilden gemeinsam mit ihren Datenverbindungen ein Echtzeitkommunikationssystem, über welches Zustandsdaten und Ereignisdaten ausgetauscht werden.

Wie im folgenden genau ausgeführt ist, haben Zustandsdaten und Ereignisdaten eine unterschiedliche Semantik, die eine unterschiedliche Bearbeitung im Kommunikationssystem nahelegt. Diese unterschiedliche Bearbeitung im Kommunikationssystem kann entweder anwendungsabhängig in der Anwendungssoftware des Host-Rechners, im Betriebssystem des Host-Rechners oder sie kann generisch im Kommunikationskontroller (in Software oder Hardware) vorgenommen werden. Die vorliegende Erfindung betrifft eine innovative Methode, wie eine solche Bearbeitung der Zustands- und Ereignisdaten generisch in der Hardware/Software des Kommunikationskontrollers vorgenommen werden kann. Die transparente Übertragung von Ereignisdaten in einem zeitgesteuerten Kommunikationssystem hat den Vorteil, daß die präzise Schnittstellendefinition im Zeit- und Wertebereich, und damit die Composability der Architektur erhalten bleibt. Weitere wirtschaftliche Vorteile sind die Reduktion der Komplexität des Betriebssystems und des Umfangs der immer wieder zu erstellenden Anwendungssoftware.

Das Dokument US 5 793 994 offenbart ein Kommunikationsverfahren in dem Ereignisdaten zusammen mit Adressfits übertragen werden.

### ZUSAMMENFASSUNG

Es ist das Ziel der vorliegenden Erfindung durch ein neues Kommunikationsverfahren in einem zeitgesteuerten verteilten Echtzeitcomputersystem die Schnittstelle zwischen dem Kommunikationskontroller und einem Host-Rechner dadurch zu vereinfachen, daß der Kommunikationskontroller autonom zwischen Zustandsdaten und Ereignisdaten unterscheidet und die Zustandsdaten entsprechend der Zustandsdatensemantik und die Ereignisdaten entsprechend der Ereignisdatensemantik vorverarbeitet. Mit diesem Verfahren können auf einem zeitgestgeuerten Basiskommunikationssystem deterministische Kommunikationskanäle zur flexiblen Übertragung von Ereignisdaten aufgebaut werden. Auf diesen flexiblen Ereigniskanälen lassen sich dann verschiedene höhere Protokolle, wie z.B., CAN, oder das OMG *Internet Inter-ORB Protocol* (IIOP) realisieren, so daß dem Host-Rechner an der CNI (Communication Network Interface) die bekannten Schnittstellen dieser Protokolle zur Verfügung gestellt werden können. Durch diese differenzierte Vorverarbeitung der Information im Kommunikationskontroller kann die Composability bei der Übertragung von Ereignisdaten erhalten, das Betriebssystem im Host-Rechner vereinfacht und das Echtzeitverhalten des Hostcomputers signifikant verbessert werden. Weiters kann vorhandene Legacy Software, wie z.B. für das CAN System, ohne wesentliche Änderungen Übernommen werden.

### KURZE BESCHREIBUNG DER ABBILDUNGEN

Das vorab beschriebene Ziel und andere neue Eigenschaften der vorliegenden Erfindung werden in den angeführten Abbildungen erläutert.
Fig. 1 zeigt die Struktur eines verteilten Echtzeitcomputersystems.
Fig. 2 zeigt das den Aufbau eines Rechnerknotens, der aus einem Kommunikationskontroller und einem Host-Rechner besteht.
Fig. 3 zeigt die Struktur der CNI (Communication Network Interface) Schnittstelle zwischen Kommunikationskontroller und Host-Rechner.
Fig. 4 zeigt ein mögliches Format der Nachrichten, die zwischen den Rechnerknoten ausgetauscht werden.

### BESCHREIBUNG EINER REALISIERUNG

Im folgenden Abschnitt wird eine konkrete Realisierung des neuen Verfahrens am Beispiel eines verteilten Echtzeitsystems mit vier Rechnerknoten, die über ein Echtzeitkommunikationssystem verbunden sind, gezeigt. Über ein solches Echtzeitkommunikationssystem müssen im allgemeinen Fall Zustandsdaten und Ereignisdaten ausgetauscht werden.

Zustandsdaten sind Daten, die über den beobachteten Wert von Zustandsvariablen informieren. Eine Beobachtung einer Zustandsvariablen ist ein unteilbares Tripel
<Name der Zustandsvariable, Wert der Zustandsvariable, Zeitpunkt der Beobachtung>
wie in Kopetz 1997, S. 31 ausführlich beschrieben. Ein Beispiel für ein Zustandsdatenelement ist die gegenwärtige Stellung eines Ventils. Die Semantik der Zustandsdaten legt es nahe, daß ein neuer Wert einer Zustandsvariablen den vorhandenen älteren Wert überschreibt und der Wert beim Auslesen nicht konsumiert wird, d.h. der gleiche Wert kann mehrfach gelesen werden. Es bietet sich an, die Schnittstelle zwischen zwei Subsystemen, die über Zustandsdaten kommunizieren, als (dual-ported) Speicherschnittstelle auszulegen. Der Sender muß darauf achten, daß der jeweils aktuelle Wert einer Zustandsvariablen in einem Datenspeicher auf der Empfängerseite zur Verfügung steht. Ein neuer Zustandsdatenwert kann den vorhandenen alten Wert überschreiben. Der Empfänger kann den aktuellen Wert durch einen *information pull* Befehl aus dem lokalen Speicher nicht konsumierend auslesen, wann immer er den Wert benötigt. Normalerweise werden Zustandsdaten für periodische Regelungsvorgänge benötigt. Sie werden daher periodisch übertragen. Wir bezeichen die beschriebene Art der Bearbeitung von Zustandsdaten als *Zustandsdatensemantik*.

Ereignisdaten sind Daten, die über eine Zustandsänderung informieren. Ein Beispiel für ein Ereignisdatenelement ist die Aussage, daß sich die Stellung eines Ventils um 5 Grad geändert hat. Eine solche Zustandsänderung wird als *Ereignis* bezeichnet. Die Ereignisdaten informieren über den Unterschied zwischen dem alten Zustand und dem neuen Zustand. Da der Verlust (oder eine Duplizierung) eines Ereignisdatenelements einen Verlust der Zustandssynchronisation zwischen Sender und Empfänger nach sich zieht, müssen Ereignisdaten vom Empfänger *exakt einmal* konsumiert werden. Für die Speicherung von Ereignisdaten bietet sich daher ein Warteschlangenspeicher, z.B, ein Ringpuffer, an, wobei der Sender über einen *Interrupt Signal (information push)* zu informieren ist, ehe der Datenspeicher voll wird und die Möglichkeit des Nachrichtenverlusts besteht. Normalerweise werden Ereignisdaten in Echtzeitsystemen im Bereich der Diagnose und Wartung ausgetauscht. Wir bezeichen die beschriebene Art der Bearbeitung von Ereignisdaten als *Ereignisdatensemantik*.

Da jede Änderung eines Zustands ein Ereignis darstellt, besteht zwischen Zustandsdaten und Ereignisdaten ein enger Zusammenhang. Auf einer hohen Abstraldionsebene ist es möglich, die eine Übertragungsform auf die andere abzubilden. Jedoch können sich im konkreten Anwendungsfall große Unterschiede in der Effizienz der Implementierung zwischen diesen beiden Arten der Datenübertragung geben. Wenn sich z.B. der Zustand eines Objekts nur sehr selten ändert, so kann die periodische Übertragung von Zustandsdaten zu einer hohen Ineffizienz der Datenübertragung führen. Anderseits bietet die periodische Zustandsdatenübertragung ein hohes Maß an Vorhersehbarkeit und Sicherheit an.

Ein wesentlicher Unterschied zwischen Zustandsdatenübertragung und Ereignisdatenübertragung liegt in der Ausprägung der der Semantik angepaßten Schnittstelle zwischen dem Kommunikationskontroller und Hostcomputer beim Empfänger. Bei Zustandsdaten kann diese Schnittstelle als *information-pull* Schnittstelle ausgeführt werden. Bei einer *information-pull* Schnittstelle bleibt die temporale Kontrolle beim Host-Rechner, dessen Zeitverhalten durch das Eintreffen einer neuen Nachricht nicht beeinflußt wird. Bei Ereignisdaten ist diese Schnittstelle im allgemeinen Fall als *information-push* Schnittstelle auszuführen. Eine *information-push* Schnittstelle hat den Nachteil, daß im allgemeinen Fall das Zeitverhalten des Host-Rechners durch das Eintreffen einer neuen Nachricht beeimlußt wird (*Interrupt Verarbeitung*) und dadurch die Zusammensetzbarkeit (composability) eines Systems im Zeitbereich verloren geht. Da normalerweise bei einer *infomation-push* Schnittstelle nicht *a priori* bekannt ist, wann und wie oft der Host-Rechner unterbrochen wird, um die Ereignisnachrichten zu bearbeiten, läßt sich in einem solchen System die Software im Host-Rechner zeitlich nicht abkapseln.

Wenn in einem System eine einheitliche Verarbeitung von Zustands- und Ereignisdaten angestrebt wird, so gibt es folgendes Dilemma:
(i) Die Schnittstelle beim Empfänger wird als *information-push* Schnittstelle ausgelegt. In diesem Fall geht die *Composability* verloren.
(ii) Die Schnittstelle zwischen Kommunikationskontroller und Hostcomputer wird als *information-pull* Schnittstelle ausgelegt. In diesem Fall können Ereignisdaten verlorengehen.

Um dieses Problem zu lösen, wird in der vorliegenden Erfindung ein neues Verfahren zur Integration von Zustandsdatenübertragung und Ereignisdatenübertragung vorgeschlagen. Es wird vorsgeschlagen, auf einem zeitgesteuerten Kommunikationssystem, wie z.B., dem TTP System, *a priori* einen Kommunikationskanal mit Ringpuffer zur Übertragung von Ereignisdaten aufzubauen.

Die Erfindung wird nun an Hand der Abbildungen erklärt.

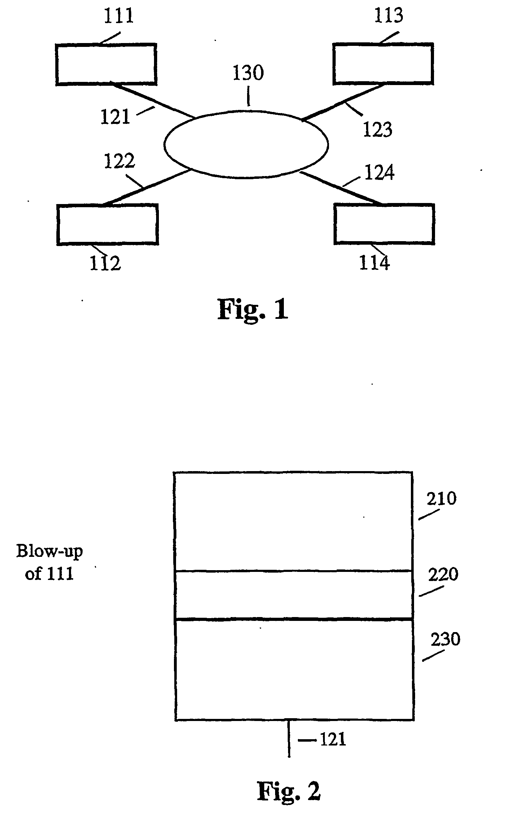

Fig. 1 zeigt ein verteiltes Computersystem, das aus vier Knotenrechnern **111, 112, 113,** und **114** besteht, die über ein Kommunikationssystem **130** miteinander verbunden sind. Dieses Kommunikationsssystem kann Nachrichten austauschen, wobei die Nachrichten sowohl Zustandsdaten wie auch Ereignisdaten (oder beide) beinhalten können.
Fig. 2 zeigt den Aufbau eines Knotenrechners **111,** der aus zwei Subsystemen, dem Kommunikationskontroller **230** und dem Hostcomputer **210** besteht. Zwischen diesen beiden Subsystemen liegt die CNI (Communication Network Interface) **220.** Diese CNI ist nun unterschiedlich ausgeprägt, je nachdem ob die Nachrichten Zustandsdaten oder Ereignisdaten (oder beide Arten von Daten) beinhalten.

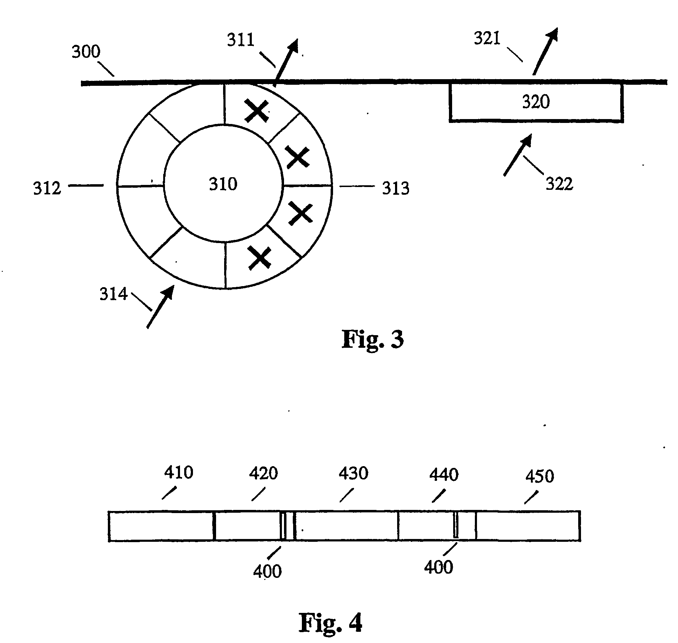

Fig. 3 zeigt die Struktur der CNI 220. An der Grenze vom Kommunikationskontroller **300** befinden sich zwei Subsystem, das Subsystem **310** zur Verarbeitung von Ereignisdaten und das Subsystem **320** zur Verarbeitung von Zustandsdaten.

Das Subsystem **310** besteht aus einem Ringpuffer, im konkreten Fall mit acht Speicherplätzen, wobei in der Fig. 3 die linken vier Speicherplätze **312** frei sind, und die rechten vier Speicherplätze **313** mit Datenelementen belegt sind. Mit dem Ringpuffer sind die beiden Pointer **311** und **314** verbunden. Der Pointer **311** zeigt auf das nächste zu konsumierende Datenelement. Nach der Konsumation eines Datenelements durch den Host-Rechner wird der Pointer so geändert, daß er auf das nächste zu konsumierende Datenelement zeigt. Der Pointer **314** zeigt auf den nächsten freien Speicherplatz. Nach dem Abspeichern eines neuen Datenelements durch das Kommunikationssystem beim Sender oder Empfänger wird der Pointer **314** so verändert, daß er auf den nächsten freien Speicherplatz zeigt. Die detaillierte Konstruktion eines Ringpuffers ist Stand der Technik und wird in Standardlehrbüchern über Betriebssysteme, wie z.B. Maekawa et.al., S. **21,** genau beschrieben. Durch die Ringpufferlogik wird die gewünschte Ereignissemantik realisiert. Um einen Datenverlust zu verhindern, muß die Ringpuffergröße mit der Verarbeitungsfrequenz des Host-Rechners so abgestimmt werden, daß immer ein freier Platz für eine neu eintreffende Ereignisnachricht vorhanden ist. Ist dies nicht der Fall, so kommt es (falls die beiden Pointer **311** und **314** zusammenlaufen) zu einer Fehlersituation, die dem Host-Rechner über ein Interruptsignal zu melden ist. In einem richtig dimensionierten System mit einem entsprechenden Ringpuffer wird auch in einem System das Ereignisdaten überträgt der Host-Computer nicht ungeplant unterbrochen. Dies ist wichtig, weil jede ungeplante Unterbrechung die Annahmen, die der WCET (worst case execution time analysis) des Host-Rechners zugrunde liegen, verletzt. Das vorab beschriebene Verfahren zur Verarbeitung von Ereignisnachrichten realisiert die gefordete *exactly-once* Semantik der Ereignisdaten. In Sonderfällen kann der Ringpuffer auch die Länge 1 haben.

Das Subsystem **320** dient zur Speicherung von Zustandsdaten. Es besteht aus einem dual-ported Speicher, in dem beim Sender der Host den jeweils letzten Wert einer Zustandsvariablen in der Form *update-in-place* (überschreibend) einträgt, und wo der Kommunikationskontroller den jeweils vorhandenen Wert einer Zustandsvariablen überträgt, und wo beim Empfänger der Kommunikationskontroller den eintreffenden Wert in der Form *update-in-place* (überschreibend) einträgt, der vom Host-Rechner einmal oder mehrmalig nicht-konsumierend ausgelesen werden kann. Die Pointer **321** und **322** zeigen deshalb immer auf den gleichen Speicherplatz. Die Kommunikation über Zustandsdaten, die die Semantik der Zustandsdaten realisiert, braucht keine so aufwendige Synchronisation wie die Kommunikation über Ereignisdaten.

Fig. 4 zeigt ein mögliches Format einer Nachricht. Im konkreten Beispiel von Fig. 4 verfügt die Nachricht über fünf Felder. Im ersten Feld **410,** dem Header, befinden sich allgemeine Informationen über die Nachricht, z.B., den Typ der Nachricht und wer der Sender der Nachricht ist. Das Feld **420** enthält Angaben über die Daten im folgenden Feld **430.** Neben allgemeinen Angaben, wie z.B., den Namen des folgenden Feldes, befindet sich in diesem Feld ein spezielles Bit, das Diskriminierungsbit **400,** welches angibt, ob die Daten im folgenden Feld Zustandsdaten oder Ereignisdaten sind. Zustandsdaten sind entsprechend der Zustandsdatensemantik (im Subsystem **310**) anzubieten, während Ereignisdaten der Ereignisdatensemantik (Subsystem 320) zu entsprechen haben. Das folgende Feld 430 enthält dann die im Feld 420 beschriebenen Daten. Feld 440 enthält schließlich die Angaben über die Daten in Feld 450. Um Übertragungsbandbreite zu sparen können die Beschreibungsfelder **420** und **440** teilweise oder vollständig in einem Speicher des empfangenden Kommunikationskontrollers abgelegt werden. Z.B. können in einem zeitgesteuerten System diese Informationen in einer Message Descriptor List (MEDL) liegen, wobei die Verbindung zwischen den Dateninhalten in den Feldern **430** und 450, und den lokal gespeicherten Beschreibungsfeldern **420** und **440** über die Zeit des Eintreffens einer Nachricht hergestellt wird (siehe Kopetz 1997, S. 181, US Patent 5,694,542, und Europäisches Patent 0 658 257). Die lokal gespeicherten Attribute können auch über den Nachrichtennamen einer eintreffenden Nachricht dynamisch der Nachricht zugewiesen werden.

Um im Echtzeitbetrieb das Zeitverhalten des Hostcomputers *a priori* analysieren zu können, müssen die maximal Zahl, und oft auch die Zeitpunkte, der Unterbrechungen des Hostcomputers, die in einem Zeitintervall auftreten können, bekannt sein. In einem strikt ereignisgesteuerten System, wie z.B. dem CAN Netzwerk, ist die Festlegung einer oberen Schranke für die Anzahl der Unterbrechungen schwierig. Durch die Bereitstellung eines Ringpuffers in der CNI des Kommunikationskontrollers wird die Schnittstelle zur Übergabe von Ereignisdaten von einer *information-push* Schnittstelle in eine *information-pull* Schnittstelle verwandelt. Das Zeitverhalten von Systemen, die über *information-pull* Schnittstellen kommunizieren, ist wesentlich leichter zu analysieren als das Zeitverhalten von Systemen mit *information-push* Schnittstellen.

In vielen Fällen ist die Folge von Ereignisdaten durch ein höheres Protokoll bestimmt. In einem solchen Protokoll muß zwischen Protokolldaten und Nutzdaten unterschieden werden. In einem zeitgesteuerten System kann über die globale Zeit bestimmt werden, welche Daten Nutzdaten und welche Daten Kontrolldaten des höheren Protokolls sind Diese Verbindung kann auch über die aktuelle Rundenposition eines zeitgesteuerten Protokolls hergestellt werden. Um dies zu erreichen kann der Kommunikationskontroller neben den Daten im Ringpuffer auch den Zeitpunkt des Eintreffens der Nachricht oder die Rundenposition der Nachricht beim Empfänger speichern. Der Empfänger kann dann aufgrund seines *a priori* Wissens über die Zeitpunkte, zu denen Kontrolldaten versandt werden, die Daten im Ringpuffer als Kontrolldaten interpretieren.

Das beschriebene Verfahren ermöglicht es, auf einem zeitgesteuerten. Kommunikationssystem, wie z.B., dem TTP System, Ereignisdatenkanäle aufzubauen. Durch die unterlagerte deterministische Zeitsteuerung ist die Datenübertragung auf diesen Ereigniskanälen systemweit konsistent geordnet. Es bietet sich somit an, auf diesen Ereigniskanälen bekannte höhere Protokolle zu realisieren, wie z.B., das CAN Protokoll, oder das OMG *Internet Inter-ORB Protocol* (IIOP). An der CNI **220** können dann die Daten und Kontrollinformationen entsprechend den Regeln dieser Protokolle angeboten werden. Damit läßt sich im Host-Rechner die vorhandene Software, die für diese Protokolle entwickelt wurde, ohne wesentliche Änderungen wieder verwenden.

Um die Effizienz dieses Verfahrens zu demonstrieren, wird im Folgenden ein Beispiel der Realisierung eines CAN Systems auf einem TTP System vorgestellt

Angenommen das TTP/C System ist wie folgt ausgelegt:
Kontenanzahl: 10
Geschwindigkeit: 10 Mbit/sec
Interframegap: 10 µsec
Framelänge: 400 bits, d.s: 50 Bytes (40 µsec)
TDMA Rundenzeit 500 µsec
Ereignisdaten 7 Bytes d.s. ca. 15 % der Bandbreite von 50 Bytes pro Frame

Nimmt man die Länge einer CAN Nachricht mit 14 Bytes an, so können in einem solchen System pro Knoten 1000 CAN Nachrichten pro Sekunde mit einer garantierten Latenz von 1 msec übertragen werden. Insgesamt lassen sich also 10 000 CAN Nachrichten pro Sekunde übertragen, ohne die verbleibenden 85 % der Bandbreite zu beeinflussen. Das beschriebene Verfahren ist auch auf Kommunikationskanäle mit sehr hohen Bandbreiten im Gigabitbereich anwendbar. Ein weiterer wesentlicher Vorteil dieses Verfahrens besteht darin, daß die Composability (Zusammensetzbarkeit) und der für eine transparente Implementierung von Fehlertoleranz notwendige Determinismus der Architektur erhalten bleiben. In einer auf TTP aufbauenden Implementierung des CAN Protokolls im TTP Kommunikationskontroller können auf der Senderseite die Prioritätslogik von CAN und auf der Empfängerseite das bekannte Nachrichtenfilterverfahren des CAN Protokolls implementiert werden.

Das beschriebene Verfahren kann sowohl in Software, wie auch in einem Mikroprogramm des Kommunikationskontrollers realisiert werden. Technisch läßt sich dieses Verfahren auch durch die Implementierung einer State-Machine direkt in der Hardware des Kommunikationskontrollers realisieren.

Zusammenfassend ergeben sich folgende wirtschaftliche Vorteile aus dem neuen Kommunikationsverfahren:
(i) Auf einem zeitgesteuerten Echtzeitkommunikationssystem können Zustandsdaten und Ereignisdaten nebeneinander übertragen werden.
(ii) Die Bandbreitenzuweisung zwischen Zustandsdaten und Ereignisdaten kann *a priori* festgelegt werden.
(iii) Alle Schnittstellen des Kommunikationssystems sind im Zeitbereich und im Wertebereich genau spezifiziert, wodurch die Composability der Architektur erhalten bleibt.
(iv) Die Übertragung der Ereignisdaten ist deterministisch, womit eine notwendige Voraussetzung für die Implementierung von aktiver Redundanz gegeben ist
(v) An der CNI werden die Ereignisdaten entsprechend der Syntax und Semantik bekannter weitverbreiteter Protokolle angeboten, womit "legacy" Software ohne hohen Portierungsaufwand weiterverwendet werden kann.
(vi) Das beschriebene Verfahren ist auf Bandbreiten im Gigabit/Sek. Bereich skalierbar, sodaß Software, die auf bestehende durch das Arbitrierungsverfahren in ihrer Geschwindigkeit beschränkte Protokolle, wie z.B. CAN, aufbaut, auch in zeitgesteuerten Systemen mit sehr hohen Bandbreiten weiterverwendet werden kann.

## Patentansprüche

1. Kommunitkationsverfahren für Echtzeitanwendungen in einem verteilten Rechnersystem, bestehend aus einer Anzahl von Rechnerknoten (**111, 112, 113** und **114**), wo jeder Rechnerknoten über einen Host-Rechner (**210**) und einen Kommunikationskontroller (**230**) verfügt, und wo sich zwischen dem Kommunikationskontroller (**230**) und dem Host-Rechner (**210**) das Communication Network Interface (**220**) befindet, und wo die Kommunikationskontroller (**230**) über ein Kommunikationssystem (**130**) verbunden sind, und wo jeder Kommunikationskontroller über einen lokalen Sendespeicher und einen lokalen Empfangsspeicher zum Senden und Empfangen von Daten verfügt, **dadurch gekennzeichnet, daß** der Kommunikationskontroller eines zeitgesteuerten Kommunikationssystems aufgrund eines Diskriminierungsbits entscheidet, ob ein Datenelement Zustandsdaten oder Ereignisdaten enthält, und wo der Kommunikationskontroller die Zustandsdaten in der Form *up-date-in-place* durch den Host im Sendespeicher, *nicht-konsumierendes Lesen* durch den Kommunikationskontroller aus dem Sendespeicher, *up-date-in-place* durch den Kommunikationskontroller im Empfangsspeicher und *nicht-konsumierendes Lesen* durch den Host-Rechner aus dem Empfangsspeicher, und die Ereignisdaten in der Form exakt *einmalige Speicherung* der Host-Daten in einen Ringpuffer des Sendespeichers, *konsumierendes Lesen* des Kommunikationskontrollers aus dem Ringpuffer des Sendespeichers, *exakt einmalige* Speichenmg durch den Kommunikationskontroller in einen Ringpuffer des Empfangsspeichers und konsumierendes Lesen durch den Host-Rechner aus dem Ringpuffer des Empfangsspeichers, verwaltet.

2. Kommunikationsverfahren für Echtzeitanwendungen nach Anspruch 1 **dadurch gekennzeichnet, daß** die Diskriminierungsbits, welche zwischen Zustandsdaten und Ereignisdaten unterscheiden, Teil der übertragenen Nachricht sind.

3. Kommunikationsverfahren für Echtzeitanwendungen nach Anspruch 1 **dadurch gekennzeichnet, daß** das Diskriminierungsbit, welches zwischen Zustandsdaten und Ereignisdaten unterscheidet, *a priori* dem Datennamen zugewiesen wird und aus dem Datennnamen abgeleitet werden kann.

4. Kommunikationsverfahren für Echtzeitanwendungen nach Anspruch 1 **dadurch gekennzeichnet, daß** die Diskriminierungsbits, welche zwischen Zustandsdaten und Ereignisdaten unterscheiden, aus dem Zeitpunkt des Eintreffens einer Nachricht abgeleitet werden können.

5. Kommunikationsverfahren für Echtzeitanwendungen nach einem oder mehreren der Ansprüche 1 bis 4 **dadurch gekennzeichnet, daß** der Kommunikationskontroller beim Empfänger spätestens unmittelbar nach der Belegung des letzten freien Elements im Ringpuffer für Ereignisdaten ein Interruptsignal an den Host-Rechner sendet, um den Host-Rechner zu veranlassen, die Ereignisdaten zu konsumieren und Speicherplatz für die nächsten Ereignisdatenelemente zu schaffen..

6. Kommunikationsverfahren für Echtzeitanwendungen nach einem oder mehreren der Ansprüche 1 bis 5 **dadurch gekennzeichnet, daß** der Kommunikationskontroller beim Empfänger auf der Basis des Zeitpunkts des Eintreffens eines Datenelements beim Empfänger entscheidet, ob ein Datenelement Nutzdaten oder Kontrolldaten eines höheren Protokolls enthält.

7. Kommunikationsverfahren für Echtzeitanwendungen nach einem oder mehreren der Ansprüche 1 bis 6 **dadurch gekennzeichnet, daß** der Kommunikationskontroller beim Empfänger auf der Basis der aktuellen Rundenposition eines zeitgesteuerten Protokolls entscheidet, ob ein in dieser Runde übertragenes Datenelement Nutzdaten oder Kontrolldaten eines höheren Protokolls enthält.

8. Kommunikationsverfahren für Echtzeitanwendungen nach einem oder mehreren der Ansprüche 1 bis 7 **dadurch gekennzeichnet, daß** die Kommunikationskontroller die Ereignisdaten im Sinne eines *a priori* bekannten höhren Protokolls intepretieren und an dem Communication Network Interface (**220**) beim Sender und beim Empfänger in der From darstellen, wie es dieses *a priori* bekannte höhere Protokoll vorschreibt.

9. Kommunikationsverfahren für Echtzeitanwendungen nach einem oder mehreren der Ansprüche 1 bis 8 **dadurch gekennzeichnet, daß** die Kommunikationskontroller die Ereignisdaten an dem Communication Network Interface (**220**) beim Sender und beim Empfänger in der Form darstellen, wie es das CAN Protokoll vorschreibt.

10. Kommunikationsverfahren für Echtzeitanwendungen nach einem oder mehreren der Ansprüche 1 bis 8 **dadurch gekennzeichnet, daß** die Kommunikationskontroller die Ereignisdaten an dem Communication Network Interface (**220**) beim Sender und beim Empfänger in der Form darstellen, wie es das OMG *Internet Inter-ORB Protocol* vorschreibt.

11. Kommunikationsverfahren für Echtzeitanwendungen nach einem oder mehreren der Ansprüche 1 bis 8 **dadurch gekennzeichnet, daß** die Kommunikationskontroller gleichzeitig verschiedene höhere Protokolle zur Übertragung von Ereignisdaten nachbilden.

12. Kommunikationskontroller für Echtzeitanwendungen **dadurch gekennzeichnet, daß** der Kommunikationskontroller alle Verfahrensschritte eines Anspruchs oder von mehreren der Ansprüche 1 bis 11 in der Hardware mittels einer State-Machine oder in einem Mikroprogramm realisiert.

## Claims

1. A communication process for real-time applications in a distributed computer system comprising a number of computer nodes (111, 112, 113, 114) of which each computer node has a host computer (210) and a communication controller (230) and between said communication controller (230) and said host computer (210) the communication network interface (220) is disposed, said communication controllers (230) being interconnected via a communication system (130), whilst each communication controller has a local send memory and a local receive memory for sending and receiving data, **characterized in that** said communication controller of a time-controlled communication system decides, on the basis of a discrimination bit, whether a data element contains status data or event data, and said communication controller manages said status data in the form of *update-in-place* by said host in said send memory, *non-consuming read-out* by said communication controller from said send memory, *update-in-place* by said communication controller in said receive memory and *non-consuming read-out* by said host computer from said receive memory, and manages said event data in the form of storage of the host data *exactly once* in a ring buffer in said send memory, *consuming read-out* by said communication controller from said ring buffer in said send memory, storage *exactly once* by said communication controller in a ring buffer in said receive memory and *consuming read-out* by said host computer from said ring buffer in said receive memory.

2. A communication process for real-time applications as defined in claim 1, **characterized in that** said discrimination bits which differentiate between status data and event data are part of the transmitted message.

3. A communication process for real-time applications as defined in claim 1, **characterized in that** said discrimination bit which differentiates between status data and event data is assigned *a priori* to the data name and can be inferred from said data name.

4. A communication process for real-time applications as defined in claim 1, **characterized in that** the discrimination bits which differentiate between status data and event data can be inferred from the time of arrival of a message.

5. A communication process for real-time applications as defined in one or more of claims 1 to 4, **characterized in that** the communication controller at the receiver sends an interrupt signal to said host computer not later than immediately after occupation of the last free element in said ring buffer for event data, in order to cause said host computer to consume the event data and provide storage space for the next event data elements.

6. A communication process for real-time applications as defined in one or more of claims 1 to 5, **characterized in that** said communication controller at the receiver decides, on the basis of the time of arrival of a data element at the receiver, whether a data element contains useful data or check data of a higher protocol.

7. A communication process for real-time applications as defined in one or more of claims 1 to 6, **characterized in that** said communication controller at the receiver decides, on the basis of the current rounding position of a time-controlled protocol, whether a data element transmitted in this round contains useful data or check data of a higher protocol.

8. A communication process for real-time applications as defined in one or more of claims 1 to 7, **characterized in that** said communication controllers interpret the event data in the sense of an *a priori* known higher protocol and present them to the communication network interface (220) at the sender and receiver in a form complying to the specifications of this *a priori* known higher protocol.

9. A communication process for real-time applications as defined in one or more of claims 1 to 8, **characterized in that** the communication controllers present the event data to the communication network interface (220) of the sender and reveiver in a form complying to the specifications of the CAN protocol.

10. A communication process for real-time applications as defined in one or more of claims 1 to 8, **characterized in that** the communication controllers present the event data to the communication network interface (220) at the sender and receiver in a form complying to specifications of the OMG internet inter-ORB protocol.

11. A communication process for real-time applications as defined in one or more of claims 1 to 8, **characterized in that** the communication controllers simultaneously simulate various higher protocols for the transfer of event data.

12. A communication controller for real-time applications, **characterized in that** said communication controller realizes all process steps defined in any one or more of claims 1 to 11 in the hardware by means of a state machine or in a microprogram.

## Revendications

1. Procédé de communication pour des utilisations en temps réel dans un ordinateur partagé composé d'une sélection de noeuds informatiques (111, 112, 113 et 114), où chaque noeud informatique dispose d'un ordinateur hôte (210) et d'un dispositif de contrôle de communication (230), où l'interface réseau de communication (220) se trouve entre le dispositif de contrôle de communication (230) et l'ordinateur hôte (210), où les dispositifs de contrôle de communication (230) sont reliés via un système de communication (130) et où chaque dispositif de contrôle de communication dispose d'une mémoire d'émission locale et d'une mémoire de réception locale pour envoyer et recevoir des données, **caractérisé en ce que** le dispositif de contrôle de communication d'un système de communication orienté temps décide, en fonction des bits de discrimination, si un élément de données comporte des données d'état ou des données d'événement, et où le dispositif de contrôle de communication gère les données d'état sous la forme *mise à jour* par substitution par l'hôte dans la mémoire d'émission, *lecture non consommante* par le dispositif de contrôle de communication à partir de la mémoire d'émission, *mise à jour par substitution* par le dispositif de contrôle de commande dans la mémoire de réception et *lecture non consommante* par l'ordinateur hôte à partir de la mémoire de réception, les données d'événement sous la forme *mémorisation précédente exacte* des données d'hôte dans une mémoire tampon annulaire de la mémoire d'émission, *lecture consommante* du dispositif de contrôle de communication à partir de la mémoire tampon annulaire de la mémoire d'émission, *mémorisation précédente exacte* par le dispositif de contrôle de communication dans une mémoire tampon annulaire de la mémoire de réception et *lecture consommante* par l'ordinateur hôte à partir de la mémoire tampon annulaire de la mémoire de réception.

2. Procédé de communication pour des utilisations en temps réel selon la revendication 1, **caractérisé en ce que** les bits de discrimination, lesquels différencient les données d'état et les données d'événement, font partie du message transmis.

3. Procédé de communication pour des utilisations en temps réel selon la revendication 1, **caractérisé en ce que** le bit de discrimination, lequel différencie les données d'état et les données d'événement, est affecté, *à priori*, au nom des données et peut être dérivé du nom des données.

4. Procédé de communication pour des utilisations en temps réel selon la revendication 1, **caractérisé en ce que** les bits de discrimination, lesquels différencient les données d'état et les données d'événement, peuvent être dérivés du moment de l'arrivée d'un message.

5. Procédé de communication pour des utilisations en temps réel selon une ou plusieurs des revendications 1 à 4, **caractérisé en ce que** le dispositif de contrôle de communication envoie à l'ordinateur hôte un signal d'interruption pour le récepteur au moins directement après l'occupation du dernier élément libre dans la mémoire tampon annulaire pour les données d'événement afin de quitter l'ordinateur hôte, de consommer les données d'événement et de libérer de la place dans la mémoire pour les éléments de données d'événement suivants.

6. Procédé de communication pour des utilisations en temps réel selon une ou plusieurs des revendications 1 à 5, **caractérisé en ce que** le dispositif de contrôle de communication décide pour le récepteur, en fonction du moment de l'arrivée d'un élément de données, si un élément de données comporte des données utiles ou des données de contrôle d'un protocole supérieur.

7. Procédé de communication pour des utilisations en temps réel selon une ou plusieurs des revendications 1 à 6, **caractérisé en ce que** le dispositif de contrôle de communication décide pour le récepteur, en fonction de la position circulaire actuelle d'un protocole orienté temps, si un élément de données transmis dans ce cercle comporte des données utiles ou des données de contrôle d'un protocole supérieur.

8. Procédé de communication pour des utilisations en temps réel selon une ou plusieurs des revendications 1 à 7, **caractérisé en ce que** les dispositifs de contrôle de communication interprètent les données d'événement dans le sens d'un protocole supérieur *à* priori connu et les représentent, au niveau de l'interface réseau de communication (220) pour l'émetteur et le récepteur sous la forme prescrite par le protocole supérieur *à priori* connu.

9. Procédé de communication pour des utilisations en temps réel selon une ou plusieurs des revendications 1 à 8, **caractérisé en ce que** les dispositifs de contrôle de communication représentent les données d'événement au niveau de l'interface réseau de communication (220) pour l'émetteur et le récepteur sous la forme prescrite par le protocole CAN.

10. Procédé de communication pour des utilisations en temps réel selon une ou plusieurs des revendications 1 à 8, **caractérisé en ce que** les dispositifs de contrôle de communication représentent les données d'événement au niveau de l'interface réseau de communication (220) pour l'émetteur et le récepteur sous la forme prescrite par le protocole Internet Inter-ORB.

11. Procédé de communication pour des utilisations en temps réel selon une ou plusieurs des revendications 1 à 8, **caractérisé en ce que** les dispositifs de contrôle de communication simulent en même temps différents protocoles supérieurs de transmission des données d'événement.

12. Procédé de communication pour des utilisations en temps réel, **caractérisé en ce que** le dispositif de contrôle de communication réalise toutes les étapes du procédé d'une revendication ou de plusieurs des revendications 1 à 11 dans le matériel à l'aide d'une machine d'état ou dans un microprogramme.
